# EUROPÄISCHE PATENTSCHRIFT

(11) **EP 0 903 518 B1**
(45) Veröffentlichungstag und Bekanntmachung des Hinweises auf die Patenterteilung: **25.07.2001**
(21) Anmeldenummer: 98116174.8
(22) Anmeldetag: 27.08.1998
(51) Int. Cl.: F16H 61/18, F16H 63/38

(54) **Schaltvorrichtung für ein Wechselgetriebe von Kraftfahrzeugen**
Shift device for a vehicle transmission
Dispostif de changement de vitesses pour transmission véhiculaire

(30) Priorität: 20.09.1997 DE 19741633
(43) Veröffentlichungstag der Anmeldung: 24.03.1999
(73) Patentinhaber: Ford Global Technologies, Inc., A subsidiary of Ford Motor Company, Dearborn, Michigan 48126 (US)
(72) Erfinder: Doelling, Matthias, 51429 Bergisch Gladbach (DE); Chazotte, Jean-Pierre, 50678 Koeln (DE); Deidewig, Hartmut, 51503 Roesrath (DE)
(74) Vertreter: Messulam, Alec Moses

(56) Entgegenhaltungen:
- WO-A-96/03684
- DE-A- 4 432 238
- DE-U- 29 615 599
- US-A- 4 633 728
- PATENT ABSTRACTS OF JAPAN vol. 007, no. 150 (P-207), 30. Juni 1983 (1983-06-30) -& JP 58 060329 A (TOYO KOGYO KK), 9. April 1983 (1983-04-09)

## Beschreibung

Die Erfindung bezieht sich auf eine Schaltvorrichtung für ein Wechselgetriebe von Kraftfahrzeugen, der im Oberbegriff des Patentanspruchs 1 erläuterten Art.

Aus der DE 41 10 555 C2 ist eine Schaltvorrichtung für ein Wechselgetriebe von Kraftfahrzeugen der im Oberbegriff des Patentanspruchs 1 erläuterten Art bekannt.

Bei der bekannten Schaltvorrichtung ist der Rückwärtsgang seitlich außerhalb des H-Schaltschemas angeordnet und dementsprechend ist keine Sperre vorgesehen, die ein unmittelbares Schalten aus einem Vorwärtsgang in den Rückwärtsgang zuverlässig unterbindet. Es ist lediglich eine Rampe vorgesehen, die den Widerstand beim Einlegen des Rückwärtsganges erhöht.

Die Aufgabe der Erfindung ist es, eine Schaltvorrichtung für ein Wechselgetriebe von Kraftfahrzeugen, der im Oberbegriff des Patentanspruchs 1 erläuterten Art derart zu verbessern, daß bei einer Schaltung, bei der der Rückwärtsgang in der Schaltgasse des 5. Ganges liegt, eine Sperre vorgesehen wird, die es verhindert, daß bei einer Rückschaltung vom 5. Gang in Richtung des 4. Ganges unbeabsichtigt der Rückwärtsgang eingerückt werden kann.

Gemäß der Erfindung wird diese Aufgabe gelöst, indem bei einer Schaltvorrichtung für ein Wechselgetriebe von Kraftfahrzeugen, der im Oberbegriff des Patentanspruchs 1 erläuterten Art, die im Kennzeichenteil des Patentanspruchs 1 aufgezeigten Merkmale angewendet werden.

Dadurch, daß das Führungsteil als ein Zylinder aus Blechmaterial ausgebildet ist, der zur Führung der Schaltbewegung eine durch gestanzte Schlitze gebildete Schaltkulisse für einen ortsfesten Schaltstift aufweist und der zur Führung der Vorwählbewegung am Außenumfang mit sich parallel zur Zylinderachse erstreckenden Rastmulden für eine ortsfeste, federbelastete Kugelraste versehen ist und innerhalb des zylindrischen Führungsteiles ein teilzylindrisches Federsegment angeordnet ist, das eine Rampenvertiefung aufweist, die im Zusammenwirken mit dem Schaltstift eine Rückwärtsgang-Schaltsperre bildet, wird eine Schaltvorrichtung geschaffen, die in ihrer Herstellung äußerst einfach und kostengünstig ist und erheblich zur Verringerung des Gewichts einer Schaltvorrichtung beiträgt.

Die Erfindung wird anhand eines in den beigefügten Zeichnungen gezeigten Ausführungsbeispieles näher erläutert. Es zeigt:
- Fig. 1: eine Schrägrißdarstellung einer Schaltvorrichtung für ein Wechselgetriebe von Kraftfahrzeugen gemäß der Erfindung.
- Fig. 2: eine Schrägrißdarstellung ähnlich Fig. 1 jedoch bei weggelassenem zylindrischen Führungsteil, damit die erfindungsgemäße Schaltsperre besser zur Geltung kommt;
- Fig. 3: einen Schnitt entlang der Linie III - III in Fig. 1 bei einer Schaltung aus der Neutralgasse in Richtung 5. Gang und
- Fig. 4: einen ähnlichen Schnitt wie Fig. 3 bei eingerücktem 5. Gang.

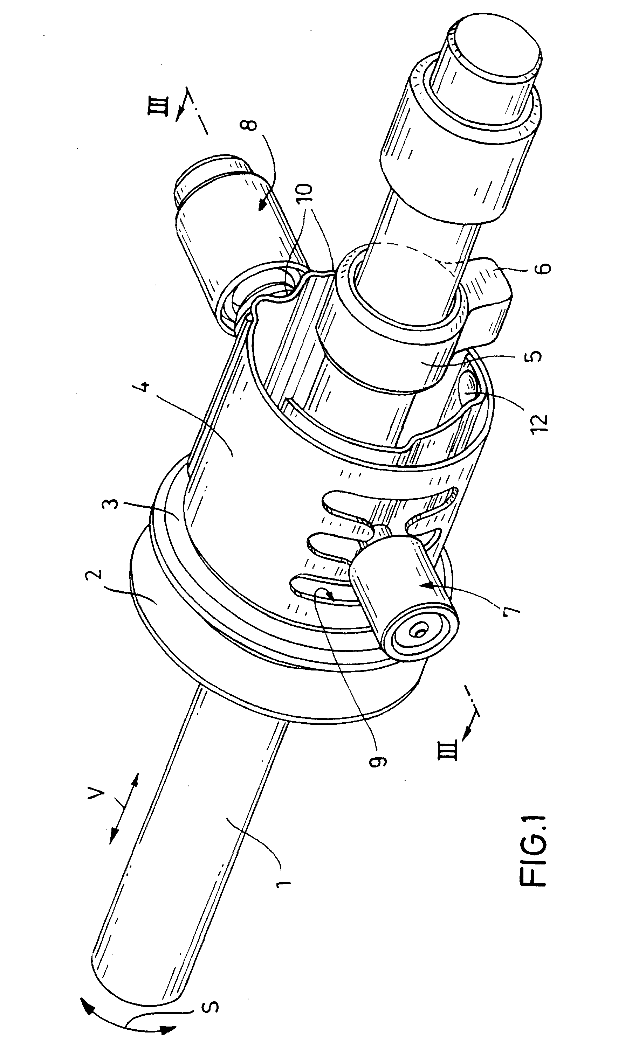

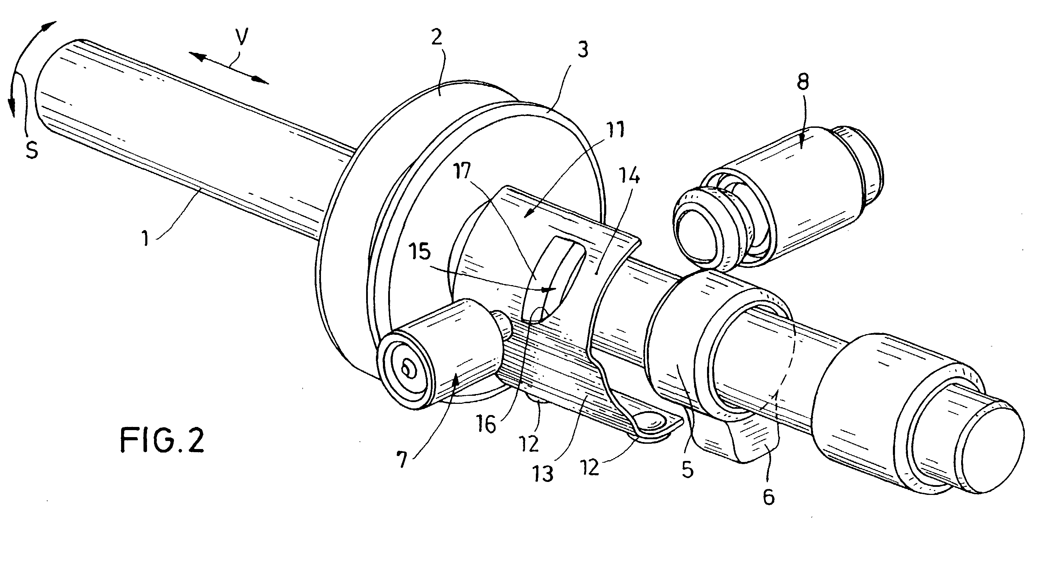

In den Fig. 1 und 2 ist nur ein Teil einer Schaltvorrichtung für ein Wechselgetriebe von Kraftfahrzeugen gezeigt, und zwar ist die zur Vorwahl von Schaltgassen axial verschiebbare und zum Einrücken von Gängen radial verschwenkbare Schaltwelle 1 mit einem Montageflansch 2 versehen, mit dem sie in eine Öffnung eines Getriebegehäuses (nicht gezeigt) einsetzbar ist.

Mit der Schaltwelle 1 ist weiter eine Scheibe 3 drehfest verbunden, an der ein zylindrisches Führungsbauteil 4 aus Blechmaterial befestigt ist, um die entsprechenden Bewegungen der Schaltwelle in Richtung des Pfeiles V für ein Vorwählen von Schaltgassen und in Richtung des Pfeiles S zum Einrücken der Gänge mitzumachen.

An der Schaltwelle 1 ist über eine Schaltfingernabe 5 ein Schaltfinger 6 drehfest angeordnet, der in üblicher (nicht dargestellter Weise) mit entsprechenden Nuten in Schaltarmen von Schaltgabeln des Wechselgetriebes zusammenwirkt, um die entsprechenden Schaltungen auszuführen. Mit dem zylindrischen Führungsteil 4 aus Blechmaterial wirken einerseits ein ortsfester, drehbar gelagerter Schaltstift 7 und andererseits eine ortsfeste, federbelastete Kugelraste 8 zusammen, die in nicht näher gezeigter Weise im Getriebegehäuse angeordnet sind.

Im zylindrischen Führungsteil 4 ist eine an sich bekannte, durch gestanzte Schlitze gebildete Schaltkulisse 9 in einer erweiterten H-Form ausgebildet. Am zylindrischen Führungsteil 4 sind weiterhin sich parallel zur Zylinderachse erstreckende Rastmulden 10 ausgebildet, von denen die mittlere die Neutrallage der Schaltwelle im Zusammenwirken mit der federbelasteten Kugelraste 8 definiert, während die beiden seitlichen Rastmulden die Einrückstellungen der Schaltwelle definieren, wobei durch die Form der Rastmulden im Zusammenwirken mit der federbelasteten Kugelraste 8 eine Einrückhilfe zum Einrücken des jeweiligen Ganges bereitgestellt wird.

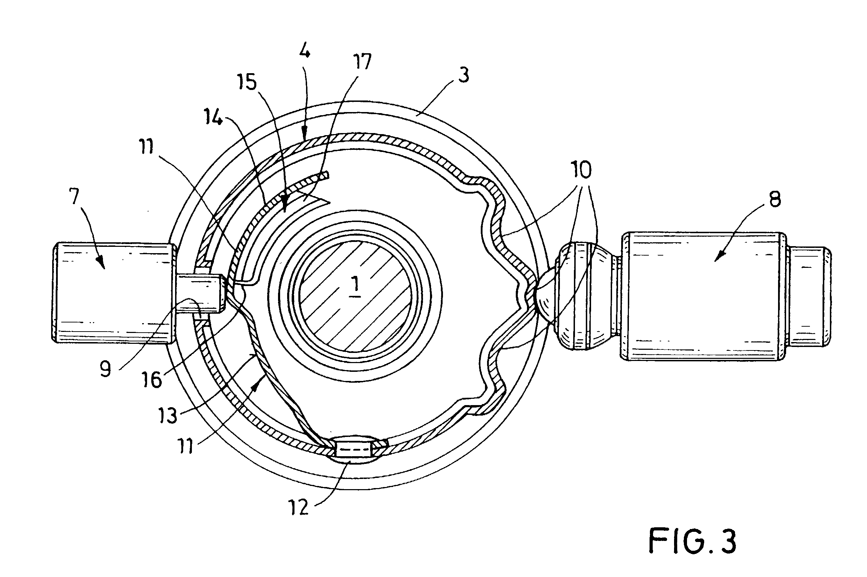

Wie am besten aus den Fig. 2, 3 und 4 ersichtlich wird, ist innerhalb des zylindrischen Führungsteiles 4 ein teilzylindrisches Federsegment 11 angeordnet und über Nieten 12 fest mit dem Bauteil 4 verbunden. Das teilzylindrische Federsegment 11 weist eine Außenkontour auf, die mit dem Schaltstift 7 wie folgt zusammenwirkt:

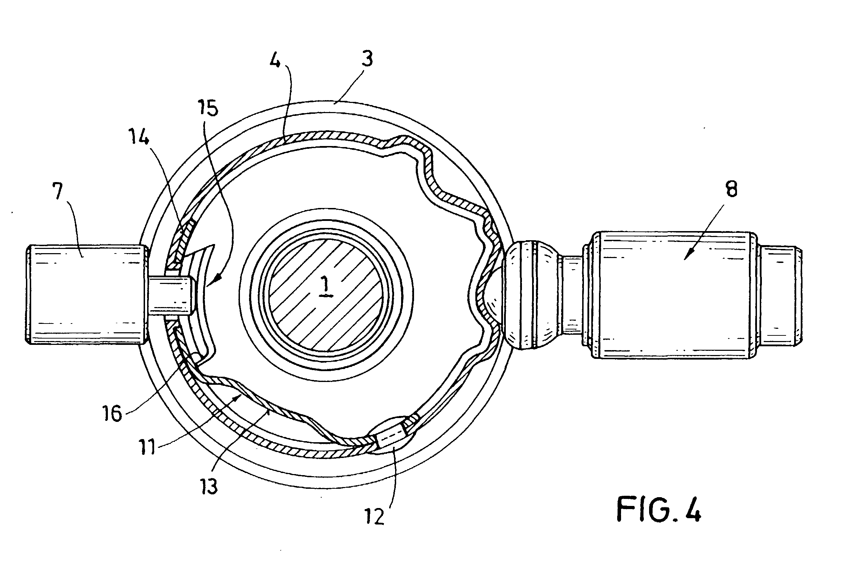

Das teilzylindrische Federsegment 11 weist, in Umfangsrichtung betrachtet, siehe Fig. 4, einen ersten Umfangsabschnitt 13 auf, der im Abstand zum Innenumfang des zylindrischen Bauteiles 4 liegt und einen zweiten Umfangsabschnitt 14, der am Innenumfang des Bauteiles 4 anliegt. Bei einer radialen Schaltbewegung kann der Schaltstift 7 normalerweise das teilzylindrische Federelement 11 federnd nach innen wegdrücken.

Das teilzylindrische Federelement 11 weist jedoch im Bereich der Schaltgasse des 5. Ganges und des Rückwärtsganges eine rampenartige Vertiefung 15 auf, so daß, wenn vom 4. Gang über eine Cross-Shift-Bewegung in den 5. Gang geschaltet wird, zwar zunächst der Umfangsbereich 14 des Federsegmentes 11 weggedrückt werden kann, bei Erreichen des 5. Ganges jedoch das Federsegment 11 wieder nach außen zurückfedert. Bei einer nunmehr folgenden Schaltbewegung vom 5. Gang kommend in Richtung des Rückwärtsganges ist ein Durchschalten in dieser Schaltgasse nicht möglich, da hier der Schaltstift 7 an der steilen Kante 16 der rampenartigen Vertiefung 15 hängen bleibt. Durch eine nach links zum 4. Gang zeigende Rampe 17 ist jedoch eine Bewegung in Richtung des 4. Ganges möglich, indem durch diese Rampe 17 ein nach Innenfedern des Federsegmentes 11 ermöglicht wird.

Damit kann bei einer in der Schaltgasse des 5. Ganges liegenden Anordnung des Rückwärtsganges mit einfachen, kostengünstigen Mitteln, bei wenig Gewicht, eine zuverlässige Rückwärtsgangschaltsperre zu Verfügung gestellt werden.

## Patentansprüche

1. Schaltvorrichtung für ein Wechselgetriebe von Kraftfahrzeugen, mit einem auf einer axial verschiebbaren und radial verschwenkbaren Schaltwelle (1) angeordneten Schaltfinger (6), der in Eingriff mit Nuten in Schaltarmen von Schaltgabeln bringbar ist und an der ein sich mit dem Schaltfinger (6) mitbewegender zylindrischer Führungsteil (4) vorgesehen ist, der Rastungen, bzw. Führungen für zumindest eine federbelastete Kugelraste (8) aufweist,
**dadurch gekennzeichnet,**daß
- das zylindrische Führungsteil (4) als ein Blechbauteil ausgebildet ist, indem zur Führung der Schaltbewegung eine durch gestanzte Schlitze gebildete Schaltkulisse (9) für einen ortsfesten, drehbar gelagerten Schaltstift (7) ausgebildet ist,
- zur Führung der Vorwählbewegung am Außenumfang sich parallel zur Zylinderachse erstreckende Rastmulden (10) für eine ortsfeste, federbelastete Kugelraste (8) ausgebildet sind und
- innerhalb des zylindrischen Führungsteiles (4) ein teilzylindrisches Federsegment (11) angeordnet und einenends durch Nieten (12) fest verbunden ist und mit einer rampenartigen Vertiefung (15) versehen ist, die im Zusammenwirken mit dem ortsfesten Schaltstift (7), eine Rückwärtsgang-Schaltsperre bildet.

2. Schaltvorrichtung für ein Wechselgetriebe von Kraftfahrzeugen nach Anspruch 1,
**dadurch gekennzeichnet**, daß
- die im teilzylindrischen Federsegment (11) ausgebildete rampenartige Vertiefung (15) eine scharfe Kante (16) in Richtung des Rückwärtsganges, in Richtung einer Cross-Schaltung zum 4. Gang jedoch eine ansteigende Rampe (17) aufweist.

3. Schaltvorrichtung für ein Wechselgetriebe von Kraftfahrzeugen nach Anspruch 1,
**dadurch gekennzeichnet**, daß
- die Rastmulden (10) durch ihre Form in Verbindung mit der federbelasteten Kugelraste (18) eine Gang-Einrückhilfe bereitstellen.

## Claims

1. Shift device for a vehicle transmission with a shift finger (6) positioned on an axially displaceable and radially pivoting shift shaft (1), whereby this shift finger (6) can be brought to engage with grooves in shift arms of shift forks and on which a cylindrical guide component (4) which moves with the shift finger (6) is provided, whereby this guide component (4) has notches / guides for at least a spring-loaded ball catch (8),
characterised in that
- the cylindrical guide component (4) is formed as a sheet metal component, in that for the guiding of the shift movement a shift corridor (9) formed through stamped slots is formed for a fixed, rotary shift rod (7)
- for guiding of the pre-selection movement on the outer perimeter there are notch hollows (10) for a fixed, spring-loaded ball catch extending parallel to the cylindrical axis and
- within the cylindrical guide component (4) there is a partly cylindrical spring segment (11) which is at one end securely connected through rivets (12) and has a ramp-like depression (15), which together with the fixed shift rod forms a reverse gear shift locking device.

2. Shift device for a vehicle transmission according to Claim 1 characterised in that
- the ramp-like depression (15) formed in the partly cylindrical spring segment (11) has a sharp edge (16) in the direction of the reverse gear, but in the direction of a cross-switch to the 4th gear has an ascending ramp.

3. Shift device for a vehicle transmission according to Claim 1
characterised in that
through their form the notch hollows (10) in connection with the spring-loaded ball catch (18) provide a gear engaging assisting device.

## Revendications

1. Dispositif de changement de vitesses pour une boîte de vitesses de véhicules, avec un doigt de commande (6) placé sur un axe de commande de changement de vitesse (1), déplaçable de manière axiale et pivotant de façon radiale, ce doigt pouvant être mis en prise avec des rainures des bras de commutation de fourchettes de boîte de vitesses, et sur lequel dispositif est prévue une pièce de guidage (4) cylindrique se déplaçant avec le doigt de commande (6), cette pièce de guidage présentant des positions de crantage ou des guidages pour au moins un loqueteau à bille (8) chargé par ressort, **caractérisé en ce que**
- la pièce de guidage cylindrique (4) est formée comme une pièce en tôle, dans laquelle une coulisse de changement de vitesse (9) formée par des fentes découpées est formée pour une broche de manoeuvre (7) montée fixe avec faculté de rotation pour le guidage du mouvement de changement de vitesses,
- des cavités à crans (10), s'étendant parallèlement à l'axe du cylindre sur le pourtour extérieur, sont formées pour un loqueteau à bille (8) placé de façon fixe et chargé par ressort, pour le guidage du mouvement de présélection et
- un segment de ressort (11) en partie cylindrique est placé à l'intérieur de la pièce de guidage (4) cylindrique et est raccordé de façon fixe à une extrémité par des rivets (12) et est muni d'un renfoncement (15) en forme de rampe qui forme un arrêt de changement de marche arrière, en coopération avec la broche de manoeuvre fixe (7).

2. Dispositif de changement de vitesses pour une boîte de vitesses de véhicules selon la revendication 1, **caractérisé en ce que** le renfoncement (15) en forme de rampe formé dans le segment à ressort (11) en partie cylindrique présente une arête (16) vive en direction de la marche arrière, en direction d'un changement de vitesses en croix ou transversal pour la 4^{ème} vitesse, cependant une rampe (17) montante.

3. Dispositif de changement de vitesses pour une boîte de vitesses de véhicules selon la revendication 1, **caractérisé en ce que** les cavités à crans (10), grâce à leur forme, fournissent une aide d'embrayage de vitesse en liaison avec le loqueteau à bille (8) chargé par ressort.
